# EUROPÄISCHE PATENTSCHRIFT

(11) **EP 3 284 661 B1**
(45) Veröffentlichungstag und Bekanntmachung des Hinweises auf die Patenterteilung: **28.11.2018**
(21) Anmeldenummer: 17180073.3
(22) Anmeldetag: 06.07.2017
(51) Int. Cl.: B62D 33/067

(54) **FAHRERHAUSLAGERUNG FÜR EIN KIPPBARES FAHRERHAUS EINES NUTZFAHRZEUGS**
DRIVERS CAB BEARING FOR A TILTABLE DRIVERS CAB OF A COMMERCIAL VEHICLE
SUSPENSION DE CABINE DE CONDUCTEUR BASCULANTE D'UN VÉHICULE UTILITAIRE

(30) Priorität: 19.07.2016 AT 3432016
(43) Veröffentlichungstag der Anmeldung: 21.02.2018
(73) Patentinhaber: MAN Truck & Bus Österreich GesmbH, 4400 Steyr (AT)
(72) Erfinder: Täuber, Klemens, 4400 Steyr (AT); Moser, Martin, 4421 Aschach an der Steyr (AT); Bramberger, Rudolf, 4441 Behamberg (AT)
(74) Vertreter: v. Bezold & Partner Patentanwälte - PartG mbB

(56) Entgegenhaltungen:
- EP-A2- 1 690 781
- WO-A1-2007/012394
- WO-A2-2011/139532
- DE-C1- 10 037 889
- US-A- 5 906 248

## Beschreibung

Die Erfindung betrifft eine Fahrerhauslagerung für ein kippbares Fahrerhaus eines Nutzfahrzeugs, insbesondere eine vordere Fahrerhauslagerung für ein kippbares Fahrerhaus eines Lastkraftwagens.

Aus der EP 1 690 781 A2 ist bereits eine vordere Fahrerhauslagerung für ein kippbares Fahrerhaus eines Nutzfahrzeugs bekannt. Derartige Fahrerhauslagerungen umfassen üblicherweise eine Schwingenkonstruktion zur Dämpfung von Bewegungen des Fahrerhauses während einer Fahrt des Nutzfahrzeugs und eine Drehstabkonstruktion zum handbetätigten Kippen des Fahrerhauses. Ein Nachteil an derartigen Fahrerhauslagerungen ist, dass die Schwingenfunktion und die Drehstabfunktion sich gegenseitig beeinflussen, insbesondere in Bezug auf deren Lagerungen. Ein anderer Nachteil ist, dass in einem Front-Crash-Fall der Motor des Nutzfahrzeugs dazu neigt, in den Fahrerhausboden einzudringen.

Eine Aufgabe der Erfindung ist es, eine verbesserte und/oder alternative Fahrerhauslagerung für ein kippbares Fahrerhaus zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine vorzugsweise vordere Fahrerhauslagerung für ein kippbares Fahrerhaus eines Nutzfahrzeugs, z. B. eines Lastkraftwagens. Das Fahrerhaus ist zweckmäßig mittels Handkraft kippbar.

Die Fahrerhauslagerung weist zwei Konsolen zur rahmenfesten, insbesondere querträgerfesten Montage an Rahmenkonstruktion des Nutzfahrzeugs auf. Die Rahmenkonstruktion umfasst zweckmäßig zumindest einen Querträger und zwei Längsträger.

Die Fahrerhauslagerung umfasst ferner eine Schwingenkonstruktion zur Dämpfung von Bewegungen des Fahrerhauses während einer Fahrt des Nutzfahrzeugs und eine Drehstabkonstruktion zum Kippen des Fahrerhauses, insbesondere mittels Handkraft.

Die Schwingenkonstruktion kann vorzugsweise zwei seitliche, z. B. lagerbockförmige Lagerabschnitte und ein die Lagerabschnitte verbindendes Querelement, z. B. ein Hohlprofilelement, aufweisen.

Die Drehstabkonstruktion ist vorzugsweise im Wesentlichen U-förmig ausgestaltet, was z. B. durch eine einteilige im Wesentlichen U-förmige Drehstabstruktur oder z. B. durch zwei im Wesentlichen L-förmige Drehstabstrukturen realisiert werden kann.

Die Fahrerhauslagerung zeichnet sich insbesondere dadurch aus, dass die Konsolen eine Rampenstruktur aufweisen, entlang der in einem Front-Crash-Fall (z. B. Frontschlag) die Schwingenkonstruktion zweckmäßig nach hinten und/oder oben geführt werden kann, so dass zweckmäßig die Gefahr des Eindringens eines Nutzfahrzeugmotors in den Fahrerhausboden verhindert oder zumindest reduziert werden kann.

Alternativ oder ergänzend zeichnet sich die Fahrerhauslagerung insbesondere dadurch aus, dass die Schwingenkonstruktion und die Drehstabkonstruktion funktionell voneinander getrennt sind.

Es ist möglich, dass die Schwingenkonstruktion und die Drehstabkonstruktion mittels voneinander getrennter Lagerungen gelagert sind und/oder mittels Ausführung als voneinander getrennte Bauteileinheiten voneinander getrennt sind, um zweckmäßig die funktionelle Trennung zu ermöglichen.

Es ist möglich, dass die Drehstabkonstruktion z. B. drehbar an die Konsolen montiert ist, so dass die Konsolen als Lagerung für die Drehstabkonstruktion dienen.

Die Konsolen können jeweils mit z. B. einer Vorspanneinrichtung zum Vorspannen der Drehstabkonstruktion versehen sein.

Die Lagerabschnitte der Schwingenkonstruktion können, insbesondere vorne, z. B. mittels Verformungslagern gelagert sein, so dass die Verformungslager als Lagerung für die Schwingenkonstruktion dienen. Die Verformungslager können zweckmäßig als Federbein-, Elastomer-, Topf- und/oder Punktkipplager ausgeführt sein.

Die Lagerabschnitte können hinten z. B. auf Längsträgern der Rahmenkonstruktion des Nutzfahrzeugs gelagert sein, z. B. aufliegen.

Die Verformungslager dienen insbesondere nicht zur Lagerung der Drehstabkonstruktion, so dass vorzugsweise die Verformungslager von Lasten der Drehstabkonstruktion zumindest im Wesentlichen isoliert sind.

Die Verformungslager können z. B. durch Durchgangsöffnungen in den Konsolen hindurchgeführt sein und/oder z. B. direkt mit ihrer Unterseite unter den Konsolen aufgelagert sein. Die Durchgangsöffnungen sind vorzugsweise in zweckmäßig im Wesentlichen horizontalen Teilabschnitten der Konsolen ausgebildet.

Es ist möglich, dass in einem Front-Crash-Fall die Verformungslager aus den Durchgangsöffnungen in den Konsolen herausbewegt (herausgezogen) werden, zweckmäßig im Wesentlichen nach oben.

Die Fahrerhauslagerung kann zwei Lagerböcke zur drehbaren Montage des Fahrerhauses aufweisen. Die Lagerböcke können z. B. drehbar an die Lagerabschnitte der Schwingenkonstruktion montiert sein, so dass sie z. B. relativ zu den Lagerabschnitten der Schwingenkonstruktion drehbar sind.

Die Lagerabschnitte der Schwingenkonstruktion umfassen zweckmäßig jeweils zwei im Wesentlichen nach oben ragende Montageabschnitte.

Die Lagerböcke zur drehbaren Montage des Fahrerhauses können vorzugsweise jeweils an und/oder zwischen den zwei Montageabschnitten drehbar gelagert werden.

Es ist möglich, dass die Drehstabkonstruktion um zumindest eine erste Achse drehbar ist, die Lagerabschnitte der Schwingenkonstruktion um eine zweite Drehachse drehbar sind und/oder die zwei Lagerböcke zur drehbaren Montage des Fahrerhauses um eine dritte Drehachse drehbar sind.

Die zumindest eine erste Drehachse, die zweite Drehachse und/oder die dritte Drehachse sind vorzugweise voneinander beabstandet und/oder verlaufen im Wesentlichen parallel zueinander.

Es ist möglich, dass im Front-Crash-Fall insbesondere das Querelement der Schwingenkonstruktion entlang der Rampenstruktur zweckmäßig nach oben und/oder nach hinten führbar ist. Im Front-Crash-Fall stößt folglich insbesondere das Querelement der Schwingenkonstruktion gegen die Rampenstruktur.

Die Konsolen können z. B. jeweils einen nach oben ragenden Teilabschnitt aufweisen und vorzugsweise einen im Wesentlichen horizontalen Teilabschnitt.

Die Rampenstruktur kann z. B. durch Stirnflächen der nach oben ragenden Teilabschnitte ausgebildet werden, die zwei Lagerabschnitte der Schwingenkonstruktion können z. B. jeweils seitlich außerhalb der zwei nach oben ragenden Teilabschnitte angeordnet werden und/oder die zwei Lagerböcke können z. B. jeweils seitlich außerhalb der zwei nach oben ragenden Teilabschnitte angeordnet werden.

Es ist möglich, dass die Konsolen auf einem Querträger der Rahmenkonstruktion montiert sind. Alternativ oder ergänzend können die Verformungslager auf an dem Querträger ausgebildeten Lagerstrukturen gelagert sein, z. B. Halteflansche, Haltekonsolen, Haltevorsprünge, Halteeinbuchtungen etc., die vorzugsweise unter den Konsolen ausgebildet sein können. Die Lagerstrukturen können z. B. von dem Querträger abstehen oder darin integriert sein.

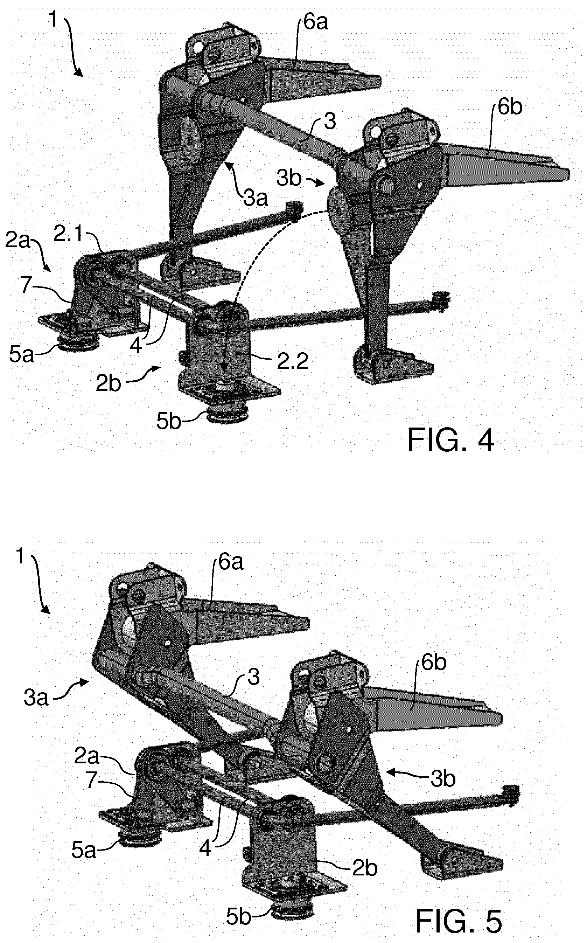

Aus den Figuren 4 bis 6 ergibt sich insbesondere, dass das Fahrerhaus zweckmäßig in Kipplage und in Fahrzustandslage auf die Fahrerhauslagerung aufsetzbar ist, was insbesondere dadurch realisierbar ist, dass die Drehstabskonstruktion, insbesondere deren beiden Stabilisatoren, durch die Vorspannvorrichtung auf Anschlag (Kipplage) nach oben drehbar sind oder erst nach dem Aufsetzen des Fahrerhauses in Niveaulage vorspannbar sind.

Die Lagerabschnitte der Schwingenkonstruktion und/oder die Lagerböcke zur Montage des Fahrerhauses können vorzugsweise sich im Wesentlichen in Längsrichtung des Nutzfahrzeugs erstreckende Tragkonstruktionen umfassen.

Zu erwähnen ist nochmals, dass die Drehstabkonstruktion zweckmäßig einteilig oder zweiteilig mittels zweier im Wesentlichen L-förmiger Drehstabstrukturen im Wesentlichen U-förmig ausgebildet sein kann.

Zu erwähnen ist außerdem, dass mittels der Fahrerhauslagerung vorzugsweise mehraxiale Belastungen auf die Verformungslager verhindert werden können.

Zu erwähnen ist ferner, dass die Drehstabskonstruktion aus vorzugsweise einem oder mehreren Stabprofilen ausgeführt sein kann, insbesondere Hohl- oder. Letztgenanntes gilt zweckmäßig ebenfalls für das Querelement der Schwingenkonstruktion.

Die Erfindung umfasst nicht nur eine Fahrerhauslagerung wie hierin beschrieben, sondern auch ein mit einer solchen Fahrerhauslagerung ausgestattetes Fahrerhaus für ein Nutzfahrzeug, insbesondere Lastkraftwagen.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Fahrerhauslagerung gemäß einer Ausführungsform der Erfindung,
- Figur 2: zeigt eine vordere Ansicht der Fahrerhauslagerung der Figur 1,
- Figur 3: zeigt eine Schnittansicht entlang Schnitt A-A der Figur 2,
- Figuren 4 bis 6: illustrieren einen Vorgang zur Platzierung der Schwingenkonstruktion an die Drehstabkonstruktion, insbesondere auf Verformungslager, gemäß einer Ausführungsform der Erfindung, und
- Figur 7: zeigt eine Seitenansicht eines Fahrerhauses gemäß einer Ausführungsform der Erfindung.

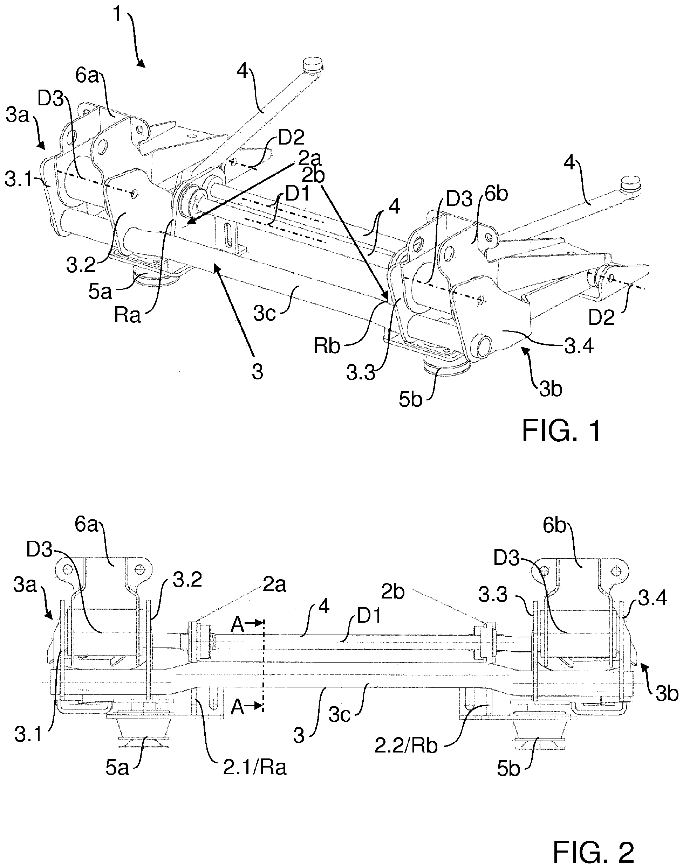

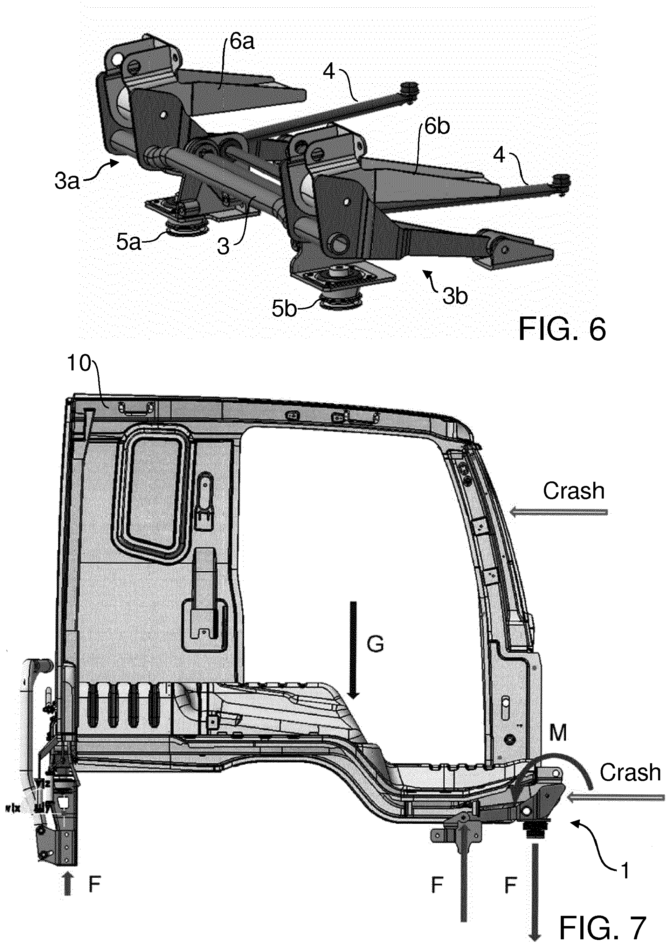

Figur 1 zeigt eine perspektivische Ansicht einer Fahrerhauslagerung 1 für ein mit Handkraft kippbares Fahrerhaus 10 (siehe Figur 7) eines Nutzfahrzeugs, insbesondere eines Lastkraftwagens.

Die Fahrerhauslagerung 1 ist insbesondere als vordere Fahrerhauslagerung ausgeführt.

Die Fahrerhauslagerung 1 umfasst zwei Konsolen 2a und 2a zur rahmenfesten Montage an eine zumindest einen Querträger und zwei Längsträger aufweisende Rahmenkonstruktion, insbesondere Fahrgestellkonstruktion des Nutzfahrzeugs. Die Konsolen 2a, 2b dienen insbesondere zur Montage an einen Querträger der Rahmenkonstruktion.

Eine Schwingenkonstruktion 3 dient zur Dämpfung von Bewegungen des Fahrerhauses 10 (z. B. Nick-, Gier- und/oder Wankbewegungen) während einer Fahrt des Nutzfahrzeugs. Die Schwingenkonstruktion 3 umfasst zwei seitliche, z. B. lagerbockförmig ausgestaltete Lagerabschnitte 3a und 3b und ein die zwei Lagerabschnitte 3a, 3b verbindendes Querelement 3c, z. B. ein Rundrohr. Die Lagerabschnitte 3a, 3b umfassen sich in Längsrichtung des Nutzfahrzeugs Tragkonstruktionen.

Eine Drehstabkonstruktion 4 dient zum Kippen des Fahrerhauses 10 mit Handkraft. In Figur 1 ist die Drehstabskonstruktion 4 aus zwei im Wesentlichen L-förmigen Drehstabstrukturen ausgeführt, die eine im Wesentlichen U-Form bilden. Es ist allerdings im Rahmen der Erfindung ebenso möglich, anstatt der in Figur 1 zweigeteilten Drehstabskonstruktion eine einteilige, vorzugsweise ebenfalls im Wesentlichen U-förmige Drehstabskonstruktion zu verwenden. Die Drehstabskonstruktion 4 ist an den Konsolen 2a, 2b drehbar montiert, so dass die Konsolen 2a, 2b als Lagerung für die Drehstabskonstruktion 4 dienen. Die Konsolen 2a, 2b umfassen jeweils eine Vorspanneinrichtung 7 (z. B. Figur 4) zum Vorspannen der Drehstabkonstruktion 4, was das Kippen des Fahrerhauses 10 mit Handkraft ermöglicht oder zumindest unterstützend hierfür wirkt.

Die Konsolen 2a, 2b weisen eine Rampenstruktur Ra und Rb auf. In einem Front-Crash-Fall des Nutzfahrzeugs kann die Schwingenkonstruktion 3, insbesondere mittels des Querelements 3c, entlang der Rampenstruktur Ra, Rb zweckmäßig nach hinten und oben geschoben werden, wodurch die Gefahr des Eindringens des Nutzfahrzeugmotors in den Fahrerhausboden reduzierbar oder gar gänzlich vermeidbar ist.

Die Lagerabschnitte 3a, 3b der Schwingenkonstruktion 3 sind zweckmäßig vorne mittels z. B. als Elastomer-/Topflager ausgeführten Verformungslagern 5a und 5b gelagert, wobei die Verformungslager 5a, 5b aber auch als Federbeinlager ausgeführt sein können. Die Verformungslager 5a, 5b dienen somit als Lagerung für die Schwingenkonstruktion 3.

Die Drehstabskonstruktion 4 hingegen ist nicht mittels der Verformungslager 5a, 5b gelagert, sondern mittels der Konsolen 2a, 2b. Dadurch kann gewährleistet werden, dass die Verformungslager 5b, 5b von Lasten der Drehstabkonstruktion 4 im Wesentlichen isoliert werden, so dass die Verformungslager 5a, 5b zweckmäßig zumindest nahezu ausschließlich durch im Wesentlichen vertikale Belastungen aus der Schwingenkonstruktion 3 beaufschlagt werden und somit vorzugsweise eine ungewünschte mehraxiale Belastung derselben zumindest im Wesentlichen vermieden werden kann.

Die Konsolen 2a, 2b umfassen vorzugsweise jeweils einen im Wesentlichen horizontalen Teilabschnitt und jeweils einen nach oben ragenden Teilabschnitt 2.1 und 2.2 (siehe Figur 2).

Die Verformungslager 5a, 5b sind insbesondere durch Durchgangsöffnungen in den Konsolen 2a, 2b hindurch geführt, insbesondere durch die im Wesentlichen horizontalen Teilabschnitte der Konsolen 2a, 2b, aus denen sie im Front-Crashfall zweckmäßig herausbeaufschlagt werden.

Die Fahrerhauslagerung 1 umfasst des Weiteren zwei Lagerböcke 6a und 6b, die zur drehbaren Montage des Fahrerhauses 1 dienen und die drehbar an die Lagerabschnitte 3a, 3b der Schwingenkonstruktion 3 montiert sind, so dass die zwei Lagerblöcke 6a, 6b relativ zu den Lagerabschnitten 3a, 3b der Schwingenkonstruktion 3 drehbar sind.

Die Lagerabschnitte 3a, 3b der Schwingenkonstruktion 3 umfassen jeweils zwei nach oben ragende Montageabschnitte 3.1 und 3.2 einerseits sowie 3.3 und 3.4 andererseits.

Die Lagerböcke 6a, 6b sind jeweils an und/oder zwischen den zwei Montageabschnitten 3.1, 3.2 sowie 3.3, 3.4 drehbar gelagert.

Die Lagerabschnitte 3a, 3b der Schwingenkonstruktion 3 und die Lagerböcke 6a, 6b umfassen sich im Wesentlichen in Längsrichtung des Nutzfahrzeugs erstreckende Tragkonstruktionen.

Die in Figur 1 hintere Drehstabstruktur und die in Figur 1 vordere Drehstabstruktur der Drehstabkonstruktion 4 sind um zwei im Wesentlichen parallel verlaufende Drehachsen drehbar, die gemeinsam mit dem Bezugszeichen D1 versehen sind. Bei einer einteiligen Ausführung der Drehstabkonstruktion 4 würde zweckmäßig nur eine Drehachse D1 vorliegen.

Die Lagerabschnitte 3a, 3b der Schwingenkonstruktion 3 sind um eine Drehachse D2 drehbar.

Die zwei Lagerböcke 6A, 6B sind um eine Drehachse D3 drehbar.

Die Drehachsen D1, die Drehachse D2 und die Drehachse D3 sind zweckmäßig voneinander beabstandet und verlaufen im Wesentlichen parallel zueinander.

Die Schwingenkonstruktion 3 und die Drehstabkonstruktion 4 sind funktionell voneinander getrennt. So sind insbesondere die Schwingenkonstruktion 3 und die Drehstabkonstruktion 4 als voneinander getrennte, eigenständige Bauteileinheiten ausgeführt und zusätzlich auf voneinander getrennten Lagerungen (2a, 2b; 5a, 5b) aufgelagert.

Figur 2 zeigt eine vordere Ansicht der Fahrerhauslagerung 1 der Figur 1.

Figur 2 kann insbesondere entnommen werden, dass die Konsole 2a den nach oben ragenden Teilabschnitt 2.1 mit der Rampenstruktur Ra umfasst und die Konsole 2b den nach oben ragenden Teilabschnitt 2.2 mit der Rampenstruktur 2b umfasst.

Die zwei Lagerabschnitte 3a, 3b der Schwingenkonstruktion 3 als auch die zwei Lagerböcke 6b, 6b sind zweckmäßig jeweils seitlich außerhalb der zwei Teilabschnitte 2.1, 2.2 angeordnet.

Die Konsolen 2a, 2b sind zweckmäßig vorgesehen, um mit ihren Unterseiten auf einem Querträger der Rahmenkonstruktion (nicht gezeigt) montiert zu werden. Die Verformungslager 5b, 5b sind vorgesehen, um zweckmäßig auf an dem Querträger ausgebildeten Lagerstrukturen (nicht gezeigt) gelagert zu werden, z. B. auf von dem Querträger getragenen Haltevorsprüngen.

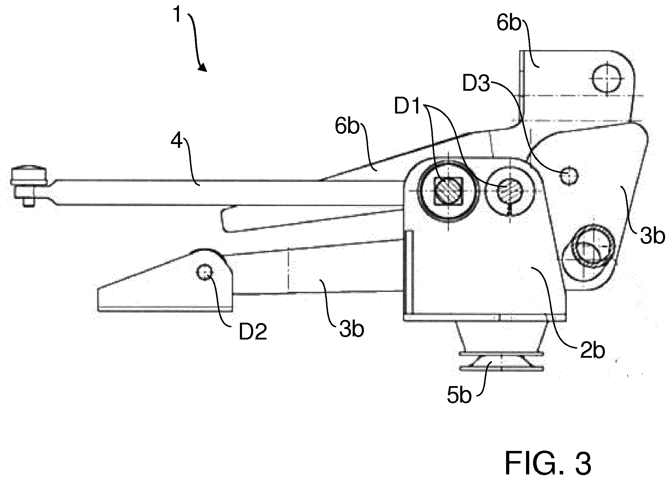

Figur 3 zeigt eine Seitenansicht der Fahrerhauslagerung 1 gemäß Schnitt A-A der Figur 2.

Die Figuren 4 bis 6 illustrieren einen Vorgang zur Platzierung der Schwingenkonstruktion 3 an die Drehstabkonstruktion 4, insbesondere auf die Verformungslager 5a, 5b gemäß einer Ausführungsform der Erfindung.

Die Figuren 4 bis 6 zeigen außerdem die an der Konsole 2a vorgesehene Vorspanneinrichtung 7 zum Vorspannen der Drehstabkonstruktion 4, die zweckmäßig baugleich an der Konsole 2b realisiert werden kann.

Aus den Figuren 4 bis 6 ergibt sich, dass das Fahrerhaus 10 in Kipplage und in Fahrzustandslage auf die Fahrerhauslagerung 1 aufsetzbar ist, was insbesondere dadurch realisierbar ist, dass die beiden Stabilisatoren 4 (Drehstabkonstruktion) durch die Vorspannvorrichtung 7 auf Anschlag (Kipplage) nach oben gedreht werden oder erst nach dem Aufsetzen des Fahrerhauses 10 in Niveaulage vorgespannt werden.

Figur 7 zeigt eine Seitenansicht eines Fahrerhauses 10 mit einer Fahrerhauslagerung 1 wie hierin beschrieben und eine in einem Front-Crash-Fall des Nutzfahrzeugs auftretende Last- und Momenten-Beanspruchung.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Fahrerhauslagerung, insbesondere vordere Fahrerhauslagerung
- 2a, 2b: Konsolen zur rahmenfesten Montage an eine Rahmenkonstruktion
- 2.1, 2.2: Nach oben ragender Teilabschnitt der jeweiligen Konsole
- 3: Schwingenkonstruktion zur Dämpfung von Bewegungen des Fahrerhauses während einer Fahrt des Nutzfahrzeugs
- 3a, 3b: Seitliche Lagerabschnitte der Schwingenkonstruktion
- 3c: die zwei Lagerabschnitte verbindendes Querelement der Schwingenkonstruktion
- 3.1, 3.2: Nach oben ragender Montageabschnitt des einen Lagerabschnitts
- 3.3, 3.4: Nach oben ragender Montageabschnitt des anderen Lagerabschnitts
- 4: Drehstabskonstruktion zum Kippen des Fahrerhauses
- 5a, 5b: Verformungslager
- 6a, 6b: Lagerböcke zur drehbaren Montage des Fahrerhauses
- 7: Vorspannvorrichtung
- Ra, Rb: Rampenstruktur an Konsolen
- D1: Zumindest eine Drehachse der Drehstabkonstruktion
- D2: Drehachse der Lagerabschnitte der Schwingenkonstruktion
- D3: Drehachse der Lagerböcke
- 10: Fahrerhaus

## Patentansprüche

1. Fahrerhauslagerung (1) für ein kippbares Fahrerhaus (10) eines Nutzfahrzeugs, vorzugsweise vordere Fahrerhauslagerung (1), mit:
- zwei Konsolen (2a, 2b) zur rahmenfesten Montage an eine Rahmenkonstruktion des Nutzfahrzeugs, insbesondere einen Querträger der Rahmenkonstruktion,
- einer Schwingenkonstruktion (3) zur Dämpfung von Bewegungen des Fahrerhauses (10) während einer Fahrt des Nutzfahrzeugs, wobei die Schwingenkonstruktion (3) zwei seitliche Lagerabschnitte (3a, 3b) und ein die Lagerabschnitte (3a, 3b) verbindendes Querelement (3c) aufweist, und
- einer Drehstabkonstruktion (4) zum Kippen des Fahrerhauses (10),
**dadurch gekennzeichnet, dass**
- die Konsolen (2a, 2b) eine Rampenstruktur (Ra, Rb) aufweisen, entlang der in einem Front-Crashfall die Schwingenkonstruktion (3) nach hinten und oben führbar ist, und/oder
- die Schwingenkonstruktion (3) und die Drehstabkonstruktion (4) funktionell voneinander getrennt sind.

2. Fahrerhauslagerung (1) nach Anspruch 1, **dadurch gekennzeichnet, dass** die Schwingenkonstruktion (3) und die Drehstabkonstruktion (4) mittels voneinander getrennter Lagerungen (2a, 2b; 5a, 5b) gelagert sind und/oder mittels Ausführung als voneinander getrennte Bauteileinheiten voneinander getrennt sind.

3. Fahrerhauslagerung (1) nach Anspruch 1 oder 2, **dadurch gekennzeichnet, dass** die Drehstabkonstruktion (4) drehbar an die Konsolen (2a, 2b) montiert ist, so dass die Konsolen (2a, 2b) als Lagerung für die Drehstabkonstruktion (4) dienen.

4. Fahrerhauslagerung (1) nach einem der vorhergehenden Ansprüche, **dadurch gekennzeichnet, dass** die Konsolen (2a, 2b) jeweils mit einer Vorspanneinrichtung (7) zum Vorspannen der Drehstabkonstruktion (4) versehen sind.

5. Fahrerhauslagerung (1) nach einem der vorhergehenden Ansprüche, **dadurch gekennzeichnet, dass** die Lagerabschnitte (3a, 3b) der Schwingenkonstruktion (3) mittels Verformungslagern (5a, 5b), insbesondere Federbein-, Elastomer-, Topf- und/oder Punktkipplagern, gelagert sind, so dass die Verformungslager (5a, 5b) als Lagerung für die Schwingenkonstruktion (3) dienen.

6. Fahrerhauslagerung (1) nach Anspruch 5, **dadurch gekennzeichnet, dass** die Verformungslager (5a, 5b) durch Durchgangsöffnungen in den Konsolen (2a, 2b) hindurchgeführt sind und/oder zweckmäßig direkt mit ihrer Unterseite unter den Konsolen (2a, 2b) aufgelagert sind.

7. Fahrerhauslagerung (1) nach Anspruch 6, **dadurch gekennzeichnet, dass** in einem Front-Crashfall die Verformungslager (5a, 5b) aus den Durchgangsöffnungen in den Konsolen (2a, 2b) herausbewegt werden.

8. Fahrerhauslagerung (1) nach einem der vorhergehenden Ansprüche, **dadurch gekennzeichnet, dass** die Fahrerhauslagerung (1) zwei Lagerböcke (6a, 6b) zur drehbaren Montage des Fahrerhauses (10) aufweist und die Lagerböcke (6a, 6b) drehbar an die Lagerabschnitte (3a, 3b) der Schwingenkonstruktion (3) montiert sind, so dass sie relativ zu den Lagerabschnitten (3a, 3b) der Schwingenkonstruktion (3) drehbar sind.

9. Fahrerhauslagerung (1) nach einem der vorhergehenden Ansprüche, **dadurch gekennzeichnet, dass** die Lagerabschnitte (3a, 3b) der Schwingenkonstruktion (3) jeweils zwei nach oben ragende Montageabschnitte (3.1, 3.2; 3.3, 3.4) aufweisen und die Lagerböcke (6a, 6b) zur drehbaren Montage des Fahrerhauses (10) jeweils an und/oder zwischen den zwei Montageabschnitten (3.1, 3.2; 3.3, 3.4) drehbar gelagert sind.

10. Fahrerhauslagerung (1) nach einem der vorhergehenden Ansprüche, **dadurch gekennzeichnet, dass** die Drehstabkonstruktion (4) um zumindest eine erste Drehachse (D1) drehbar ist, die Lagerabschnitte (3a, 3b) der Schwingenkonstruktion (3) um eine zweite Drehachse (D2) drehbar sind und die zwei Lagerböcke (6a, 6b) zur drehbaren Montage des Fahrerhauses (10) um eine dritte Drehachse (D3) drehbar sind und vorzugsweise die zumindest eine erste Drehachse (D1), die zweite Drehachse (D2) und die dritte Drehachse (D3) voneinander beabstandet sind und im Wesentlichen parallel verlaufen.

11. Fahrerhauslagerung (1) nach einem der vorhergehenden Ansprüche, **dadurch gekennzeichnet, dass** im Front-Crashfall das Querelement (3c) der Schwingenkonstruktion (3) entlang der Rampenstruktur (Ra, Rb) nach oben führbar ist und/oder die zwei Lagerabschnitte (3a, 3b) der Schwingenkonstruktion (3) zweckmäßig hinten auf Längsträgern der Rahmenkonstruktion des Nutzfahrzeugs gelagert sind.

12. Fahrerhauslagerung (1) nach einem der vorhergehenden Ansprüche, **dadurch gekennzeichnet, dass** die Konsolen (2a, 2b) vorzugsweise jeweils einen im Wesentlichen horizontalen Teilabschnitt und jeweils einen nach oben ragenden Teilabschnitt (2.1, 2.2) aufweisen und
- die Rampenstruktur (Ra, Rb) durch Stirnflächen der nach oben ragenden Teilabschnitte (2.1, 2.2) gebildet wird,
- die zwei Lagerabschnitte (3a, 3b) der Schwingenkonstruktion (3) jeweils seitlich außerhalb der nach oben ragenden Teilabschnitte (2.1, 2.2) angeordnet sind, und/oder
- die zwei Lagerböcke (6a, 6b) jeweils seitlich außerhalb der nach oben ragenden Teilabschnitte (3.1, 3.2) angeordnet sind.

13. Fahrerhauslagerung (1) nach einem der vorhergehenden Ansprüche, **dadurch gekennzeichnet, dass** die Konsolen (2a, 2b) auf einem Querträger der Rahmenkonstruktion montiert sind und/oder die Verformungslager (5a, 5b) auf an dem Querträger ausgebildeten Lagerstrukturen montiert sind.

14. Fahrerhauslagerung (1) nach einem der vorhergehenden Ansprüche, **dadurch gekennzeichnet, dass** das Fahrerhaus (10) in Kipplage und in Fahrzustandslage auf die Fahrerhauslagerung (1) aufsetzbar ist.

15. Fahrerhaus (10) für ein Nutzfahrzeug, mit einer Fahrerhauslagerung (1) nach einem der vorhergehenden Ansprüche.

## Claims

1. Cab suspension (1) for a tiltable cab (10) of a commercial vehicle, preferably a front cab-suspension (1), having:
- two brackets (2a, 2b) for mounting on a frame construction of the commercial vehicle, in particular a cross-member of the frame construction, in a manner fixed to the frame,
- a vibration construction (3) for damping movements of the cab (10) whilst the commercial vehicle is travelling, wherein the vibration construction (3) has two lateral bearing portions (3a, 3b) and a cross-element (3c) connecting the bearing portions (3a, 3b), and
- a torsion-bar construction (4) for tilting the cab (10),
**characterized in that**
- the brackets (2a, 2b) have a ramp structure (Ra, Rb) along which the vibration construction (3) may be guided backwards and upwards in the event of a frontal collision, and/or
- the vibration construction (3) and the torsion-bar construction (4) are functionally separate from one another.

2. Cab suspension (1) according to Claim 1, **characterized in that** the vibration construction (3) and the torsion-bar construction (4) are supported by means of mutually separate bearing arrangements (2a, 2b; 5a, 5b) and/or are separate from one another as a result of being constructed as mutually separate component units.

3. Cab suspension (1) according to Claim 1 or 2, **characterized in that** the torsion-bar construction (4) is rotatably mounted on the brackets (2a, 2b) so that the brackets (2a, 2b) serve as a bearing arrangement for the torsion-bar construction (4).

4. Cab suspension (1) according to one of the preceding claims, **characterized in that** the brackets (2a, 2b) are each provided with a pre-tensioning device (7) for pre-tensioning the torsion-bar construction (4).

5. Cab suspension (1) according to one of the preceding claims, **characterized in that** the bearing portions (3a, 3b) of the vibration construction (3) are supported by means of deformation bearings (5a, 5b), in particular suspension strut bearings, elastomeric bearings, pot bearings and/or spherical bearings, so that the deformation bearings (5a, 5b) serve as a bearing arrangement for the vibration construction (3) .

6. Cab suspension (1) according to Claim 5, **characterized in that** the deformation bearings (5a, 5b) are guided through through-openings in the brackets (2a, 2b) and/or expediently supported directly with their lower side below the brackets (2a, 2b).

7. Cab suspension (1) according to Claim 6, **characterized in that** the deformation bearings (5a, 5b) are moved out of the through-openings in the brackets (2a, 2b) in the event of a frontal collision.

8. Cab suspension (1) according to one of the preceding claims, **characterized in that** the cab suspension (1) has two bearing blocks (6a, 6b) for rotatable mounting of the cab (10) and the bearing blocks (6a, 6b) are rotatably mounted on the bearing portions (3a, 3b) of the vibration construction (3) so that they are rotatable relative to the bearing portions (3a, 3b) of the vibration construction (3).

9. Cab suspension (1) according to one of the preceding claims, **characterized in that** the bearing portions (3a, 3b) of the vibration construction (3) each have two upwardly projecting mounting portions (3.1, 3.2; 3.3, 3.4) and the bearing blocks (6a, 6b) for rotatable mounting of the cab (10) are each rotatably supported on and/or between the two mounting portions (3.1, 3.2; 3.3, 3.4).

10. Cab suspension (1) according to one of the preceding claims, **characterized in that** the torsion-bar construction (4) is rotatable about at least one first axis of rotation (D1), the bearing portions (3a, 3b) of the vibration construction (3) are rotatable about a second axis of rotation (D2) and the two bearing blocks (6a, 6b) for rotatable mounting of the cab (10) are rotatable about a third axis of rotation (D3) and preferably the at least one first axis of rotation (D1), the second axis of rotation (D2) and the third axis of rotation (D3) are spaced from one another and extend substantially parallel.

11. The cab suspension (1) according to one of the preceding claims, **characterized in that** the cross-element (3c) of the vibration construction (3) may be guided upwards along the ramp structure (Ra, Rb) in the event of a frontal collision and/or the two bearing portions (3a, 3b) of the vibration construction (3) are expediently supported on side-members of the frame construction of the commercial vehicle at the back.

12. Cab suspension (1) according to one of the preceding claims, **characterized in that** the brackets (2a, 2b) preferably have a substantially horizontal section in each case and an upwardly projecting section (2.1, 2.2) in each case, and
- the ramp structure (Ra, Rb) is formed by end faces of the upwardly projecting sections (2.1, 2.2),
- the two bearing portions (3a, 3b) of the vibration construction (3) are each arranged laterally outside the upwardly projecting sections (2.1, 2.2) and/or
- the two bearing blocks (6a, 6b) are each arranged laterally outside the upwardly projecting sections (3.1, 3.2).

13. Cab suspension (1) according to one of the preceding claims, **characterized in that** the brackets (2a, 2b) are mounted on a cross-member of the frame construction and/or the deformation bearings (5a, 5b) are mounted on bearing structures formed on the cross-member.

14. Cab suspension (1) according to one of the preceding claims, **characterized in that** the cab (10) may be positioned on the cab suspension (1) in the tilted position and in the driving position.

15. Cab (10) for a commercial vehicle, having a cab suspension (1) according to one of the preceding claims.

## Revendications

1. Suspension de cabine de conducteur (1) pour une cabine de conducteur basculante (10) d'un véhicule utilitaire, de préférence suspension avant de cabine de conducteur (1), comprenant :
- deux consoles (2a, 2b) pour le montage fixé au châssis sur une construction de châssis du véhicule utilitaire, en particulier une traverse de la construction de châssis,
- une construction à bras oscillants (3) pour l'amortissement de mouvements de la cabine de conducteur (10) pendant une conduite du véhicule utilitaire, la construction à bras oscillants (3) présentant deux portions de palier latérales (3a, 3b) et un élément transversal (3c) reliant les portions de palier (3a, 3b), et
- une construction à barre de torsion (4) pour le basculement de la cabine de conducteur (10),
**caractérisée en ce que**
- les consoles (2a, 2b) présentent une structure en rampe (Ra, Rb) le long de laquelle la construction à bras oscillants (3) peut être guidée vers l'arrière et vers le haut dans le cas d'une collision frontale, et/ou
- la construction à bras oscillants (3) et la construction à barre de torsion (4) sont fonctionnellement séparées l'une de l'autre.

2. Suspension de cabine de conducteur (1) selon la revendication 1, **caractérisée en ce que** la construction à bras oscillants (3) et la construction à barre de torsion (4) sont supportées au moyen de suspensions (2a, 2b ; 5a, 5b) séparées l'une de l'autre et/ou sont séparées l'une de l'autre par une réalisation sous forme de composants unitaires séparés l'un de l'autre.

3. Suspension de cabine de conducteur (1) selon la revendication 1 ou 2, **caractérisée en ce que** la construction à barre de torsion (4) est montée de manière rotative sur les consoles (2a, 2b) de telle sorte que les consoles (2a, 2b) servent de suspension pour la construction à barre de torsion (4) .

4. Suspension de cabine de conducteur (1) selon l'une quelconque des revendications précédentes, **caractérisée en ce que** les consoles (2a, 2b) sont chacune pourvues d'un dispositif de précontrainte (7) pour précontraindre la construction à barre de torsion (4).

5. Suspension de cabine de conducteur (1) selon l'une quelconque des revendications précédentes, **caractérisée en ce que** les portions de palier (3a, 3b) de la construction à bras oscillants (3) sont supportées au moyen de paliers de déformation (5a, 5b), en particulier des paliers de jambes de force, des paliers en élastomère, des paliers de type pot et/ou des paliers de basculement ponctuels, de telle sorte que les paliers de déformation (5a, 5b) servent de suspension pour la construction à bras oscillants (3).

6. Suspension de cabine de conducteur (1) selon la revendication 5, **caractérisée en ce que** les paliers de déformation (5a, 5b) sont guidés à travers des ouvertures de passage dans les consoles (2a, 2b) et/ou, de manière judicieuse, sont directement appliquées avec leur côté inférieur en dessous des consoles (2a, 2b).

7. Suspension de cabine de conducteur (1) selon la revendication 6, **caractérisée en ce que** dans le cas d'une collision frontale, les paliers de déformation (5a, 5b) sont déplacés hors des ouvertures de passage dans les consoles (2a, 2b).

8. Suspension de cabine de conducteur (1) selon l'une quelconque des revendications précédentes, **caractérisée en ce que** la suspension de cabine de conducteur (1) présente deux coussinets (6a, 6b) pour le montage rotatif de la cabine de conducteur (10) et les coussinets (6a, 6b) sont montés de manière rotative sur les portions de palier (3a, 3b) de la construction à bras oscillants (3), de telle sorte qu'ils puissent tourner par rapport au portions de palier (3a, 3b) de la construction à bras oscillants (3).

9. Suspension de cabine de conducteur (1) selon l'une quelconque des revendications précédentes, **caractérisée en ce que** les portions de palier (3a, 3b) de la construction à bras oscillants (3) présentent à chaque fois deux portions de montage saillant vers le haut (3.1, 3.2 ; 3.3, 3.4) et les coussinets (6a, 6b) pour le montage rotatif de la cabine de conducteur (10) sont à chaque fois supportés de manière rotative sur et/ou entre les deux portions de montage (3.1, 3.2 ; 3.3, 3.4).

10. Suspension de cabine de conducteur (1) selon l'une quelconque des revendications précédentes, **caractérisée en ce que** la construction à barre de torsion (4) peut tourner autour d'au moins un premier axe de rotation (D1), les portions de palier (3a, 3b) de la construction à bras oscillants (3) peuvent tourner autour d'un deuxième axe de rotation (D2) et les deux coussinets (6a, 6b) pour le montage rotatif de la cabine de conducteur (10) peuvent tourner autour d'un troisième axe de rotation (D3) et de préférence l'au moins un premier axe de rotation (D1), le deuxième axe de rotation (D2) et le troisième axe de rotation (D3) sont espacés les uns des autres et s'étendent essentiellement parallèlement les uns aux autres.

11. Suspension de cabine de conducteur (1) selon l'une quelconque des revendications précédentes, **caractérisée en ce que** l'élément transversal (3c) de la construction à bras oscillants (3) peut être guidé vers le haut le long de la structure en rampe (Ra, Rb) en cas de collision frontale et/ou les deux portions de palier (3a, 3b) de la construction à bras oscillants (3) sont judicieusement supportées à l'arrière sur des longerons de la construction de châssis du véhicule utilitaire.

12. Suspension de cabine de conducteur (1) selon l'une quelconque des revendications précédentes, **caractérisée en ce que** les consoles (2a, 2b) présentent de préférence à chaque fois une portion partielle essentiellement horizontale et à chaque fois une portion partielle faisant saillie vers le haut (2.1, 2.2) et
- la structure en rampe (Ra, Rb) est formée par des surfaces frontales des portions partielles faisant saillie vers le haut (2.1, 2.2),
- les deux portions de palier (3a, 3b) de la construction à bras oscillants (3) sont à chaque fois disposées latéralement à l'extérieur des portions partielles faisant saillie vers le haut (2.1, 2.2), et/ou
- les deux coussinets (6a, 6b) sont à chaque fois disposés latéralement à l'extérieur des portions partielles faisant saillie vers le haut (3.1, 3.2).

13. Suspension de cabine de conducteur (1) selon l'une quelconque des revendications précédentes, **caractérisée en ce que** les consoles (2a, 2b) sont montées sur une traverse de la construction de châssis et/ou les paliers de déformation (5a, 5b) sont montés sur des structures de palier réalisées sur la traverse.

14. Suspension de cabine de conducteur (1) selon l'une quelconque des revendications précédentes, **caractérisée en ce que** la cabine de conducteur (10), dans la position basculée et dans la position de conduite, peut être posée sur la suspension de cabine de conducteur (1).

15. Cabine de conducteur (10) pour un véhicule utilitaire, comprenant une suspension de cabine de conducteur (1) selon l'une quelconque des revendications précédentes.
